# EUROPEAN PATENT APPLICATION

(11) **EP 2 238 874 A1**
(43) Date of publication of application: **13.10.2010**
(21) Application number: 10159091.7
(22) Date of filing: 06.04.2010
(51) Int. Cl.: A47G 27/00, B32B 27/40

(54) **Safety apparatus for providing protection against an explosion and vehicle comprising same**

(30) Priority: 07.04.2009 IL 19809809
(71) Applicant: Plasan Sasa Ltd, 13870 M.P. Marom Hagalil (IL)
(72) Inventor: NARODITSKY, Dmitry, 44378, Kefar Sava (IL)
(74) Representative: Modiano, Micaela Nadia

(57) **Abstract**

A floor mat configured to be used as a floor at under normal conditions, and to be used as a safety apparatus for providing protection against an explosion which may exert certain compressive forces thereon, the floor mat comprising a perforated layer of material made of foam and/or gel or soft rubber.

## Description

### FIELD

The subject matter herein relates in general to a safety apparatus for providing protection against an explosion, and in particular relates to a safety apparatus which may be used in a vehicle for protecting an occupant disposed therein against compressive forces caused by an explosion.

### BACKGROUND

It is known that if a vehicle is subjected to sudden external forces, such as those caused by an explosion external to the vehicle, injury to occupants within the vehicle will likely occur as a result of objects, such as shrapnel, being violently projected into the crew compartment.

In cases where a vehicle is armored and the armor is designed to prevent mechanical projectiles such as shrapnel entering a crew compartment of the vehicle, objects projected inwardly, even when not caused to be made airborne, towards an occupant may also include the vehicle's walls, which, due to the tremendous forces exerted during an explosion, may cause serious injury or death. To aid understanding of such forces, for example, an improvised explosive device may have an approximate fragment velocity of 950m/s, which, when impacting a vehicle's outer surface, may cause significant deformation or penetration thereof. Therefore inward deformation of the vehicle itself also poses a threat to occupants situated therein.

Providing armored vehicles with safety apparatuses against explosions is a complex matter, since even small amounts of weight added to the vehicle by equipping the vehicle with additional elements inevitably reduces the maximum speed and maneuverability of the vehicle, which can have life and death consequences in battle. Similarly, adding additional elements to a crew compartment of a vehicle may reduce important vertical space within a crew compartment, such space being necessarily minimized to allow the vehicle to have maximal turning maneuverability and stability on non-even terrain.

Known safety apparatuses for preventing injury to occupants within a vehicle, via deformation of the vehicle caused by an external explosion, include, for example, suspended seats, suspended foot rests used together with suspended seats, and floating floors.

Suspended seats are, as the name suggests, seats which are suspended in a vehicle, i.e. held in a suspended position spaced from the lower and upper surfaces of the vehicle. Such seats are suspended by, for example, by ropes or other elements which do not transfer compressive forces from the vehicles upper or lower surfaces during an explosion. To elaborate how such suspended seat works, during an explosion under a vehicle, the vehicle floor is violently projected upwardly, however an occupant resting on a suspended seat is spaced from the floor and therefore may escape injury since the vehicle floor's upward projecting motion does bridge the space to reach the occupant. Additionally, since the ropes suspending the seat do not transfer compressive forces, and generally bend, as they are compressed by the floor becoming more proximate to the seat, compressive forces are not transferred from the floor of the vehicle to the suspended seat and hence an occupant seated thereon. Thus it can be seen that distancing vehicle occupants from the inner surfaces of a vehicle, and not allowing the occupants to directly contact elements which may transfer compressive forces from the inner surfaces of the vehicle are the mechanisms which allow a suspended seat to protect such users.

Such seats may also be equipped with suspended foot rests, which may be integrally attached to the seats spaced from the floor to allow a user to rest their feet, while seated on the seat, in a position spaced from the floor of the vehicle. The foot rests providing a safety aspect to a user, similar to that provided by the suspended seat itself, since the feet of the user are spaced from the floor when resting thereon.

A similar mechanism to a suspended seat is a so-called 'floating floor' which may be a floor, spaced and above a main floor of a vehicle, which allows a user to contact the floating floor, while danger from an explosion under the vehicle is reduced due to the spacing between the vehicle floor and floating floor, for reasons similar to those described above with reference to suspended seats.

### SUMMARY

The subject matter disclosed herein relates to a safety apparatus for protecting a user against compressive forces of an explosion. The safety apparatus may protect a user by absorbing compressive forces of the explosion or by deflecting such forces away from the user. To achieve such protection, the safety apparatus may be interposed between the user and a location from which an explosion is expected to originate.

For the purposes of the specification and the claims:
- The term "impact-facing surface" refers to a surface of the safety apparatus closest to a location from which an explosion is expected to originate.
- The term "rear surface" refers to a surface of the safety apparatus furthest from a location from which an explosion is expected to originate, i.e. a surface at the opposite side of the safety apparatus from the impact-facing surface thereof.
- The term "armor" refers to a construction configured to stop or neutralize ballistic projectiles such as bullets, shells, shrapnel or fragments (i.e, projectiles which were intentionally projected towards an object to at least injure or damage). Example materials normally used as armor layers are metals, metal alloys, plastics, fiber composites or fiberglass, aramid (Kevlar^{™}, Dyneema^{™}).
- The term "non-perforated layer" refers to a layer which is continuous or solid.
- The term "portion of a layer disposed between perforations" or similar language, refers to a solid portion of such layer, i.e. a portion comprising material of which the layer is constituted.
- The term "foam and/or gel or soft rubber" refers to materials which, though being foams, gels, soft rubber and materials made of gel and foam, are still hard enough to retain its shape and the shape of perforations with which they are produced, under normal conditions of usage.
- The term "normal conditions of usage" for a safety apparatus as disclosed herein, which is attached to an upper surface of the floor of a vehicle, will include the safety apparatus being trampled on by occupants of the vehicle. In all cases, the term "normal conditions" is not intended to include conditions which occur when the safety apparatus is subjected to forces caused by an explosion.
- The term "layer of material" or like-name, refers to a layer made of foam and/or gel or soft rubber.
- The term 'perforation' is a constructional description and is not intended to imply a particular method of manufacture of a perforated layer or the perforations thereof, which may be manufactured in any known manner.
- The term 'perforated layer' is referred to as a 'layer' because it comprises a common perforation or common perforations being formed therethrough, however this does not preclude the layer from being part of a multi-layer construction which includes non-perforated layers.
- The term "abrasion-resistant covering" is defined as a heavy duty covering configured to be repeatedly trampled upon by users wearing boots, without sustaining significant damage or tearing. Therefore such term excludes, for example, woven materials which may tear when trampled.
- The term 'safety apparatus' of the type disclosed herein is an apparatus configured only to deflect, absorb or dampen compressive forces caused by an explosion and is not configured to provide the function as an armor, as defined above.
- The term "crew compartment" of a vehicle refers to any compartment of a vehicle designed to transport occupants.

In accordance with one aspect of the subject matter disclosed herein, there is provided a safety apparatus for providing protection against an explosion which may exert on said safety apparatus certain compressive forces, the safety apparatus comprising a perforated layer of material made of foam and/or gel or soft rubber.

The safety apparatus may be a floor mat.

The floor mat may be configured to be used as a floor mat under normal conditions, and to be used as a safety apparatus for providing protection against an explosion which may exert certain compressive forces thereon, the floor mat comprising a perforated layer of material made of foam and/or gel or soft rubber.

It has been surprisingly found that the extremely thin and light construction disclosed herein may provide significant protection against the tremendous force of an explosion, such as that caused by a mine or IED.

The perforated layer of material may be flexible.

The perforated layer of material, when an impact-facing surface thereof is subjected to compressive forces exerted thereon by the explosion, may be configured to deflect the compressive forces in a direction substantially perpendicular to the impact-facing surface.

The perforated layer of material, may be part of a multi-layer construction including further layers of material, each of the further layers being made of foam and/or gel or soft rubber. The perforated layer of material, may be part of a multi-layer construction including further layers of material, each of the further layers being made of the same type of material as the perforated layer of material. The further layer may include at least one additional perforated layer. The perforated layer of material may be sandwiched between two non-perforated layers of material. In a case where there are more than one perforated layers of material, the two perforated layers may be disposed adjacent to each other. In such case the perforations of the adjacent perforated layers may be aligned.

The perforated layer may comprise opposite first and second external surfaces. The first and second external surfaces may be the most major surfaces of the perforated layer. The perforated layer may have a thickness dimension perpendicular to the first and second external surfaces and extending therebetween, the perforations extend from the first external surface to the second external surface, wherein a distance between proximal points of adjacent perforations is less than twice the thickness of the perforated layer.

Each of the perforations may be formed with a peripheral edge. The perforations may be cylindrical. The perforations may be hollow. At least some of the perforations may be filled with articles. All of the perforations may be filled with articles. The perforations may constitute between 50 to 75 percent of the volume of the perforated layer. The perforations may constitute about 64 percent of the volume of the perforated layer.

The perforated layer of material may be made of only foam and/or gel. I.e. the perforated layer of material may be free of soft rubber.

The gel may be an air-gel.

Whilst explosions cause compressive forces of extremely high magnitudes, it was surprisingly found that certain materials were capable of deflecting significant amounts of such compressive forces, thereby allowing a safety apparatus to be constructed thereof. The layer of perforated material may be comprised of a material, having any one, or any combination, of the following properties:
- The material of the safety apparatus may be configured to deflect at least 500 Newtons of compressive force exerted thereon by said explosion. Preferably the material of the safety apparatus may be configured to deflect at least 1000 Newtons of compressive force exerted thereon by said explosion.
- The material, when tested in accordance with ASTM 3574, may have a density less than 19 lb./ft³.
- The material, when tested in accordance with ASTM 1667, may have a compression set of less than 3%.
- The material, when tested in accordance with ASTM 3574, may have a compression set of less than 11%.
- The material, when tested in accordance with ASTM D-624, may have a tear strength of greater than 9 lbs/in minute.
- The material, when tested in accordance with ASTM 3574, may have an elongation of less than 81 %.
- The material, when tested in accordance with ASTM 3574, may have a tensile strength of greater than 54 psi.
- The material may have a Shore A hardness of greater than 24.
- The material, when tested in accordance with ASTM 3574, may preferably have a compression force deflection of greater than about 8 psi.
- The material, when tested in accordance with a drop weight impact test, may have an energy return of between about 35 to 41%.
- The material may be a dry viscoelastic air-frothed polyurethane elastomer, or like material.
- The material may be an air-frothed viscoelastic dry polymer, or like material.

The shape of the material may be such that the impact-receiving surface and rear surface are substantially planar and opposite to each other, and are spaced by a thickness dimension perpendicular to the impact-receiving surface and rear surface, the thickness being less than 3 inches. The thickness may be between 0.25 inch and 3 inches, and preferably between 1/2 inch and 2 inch.

The safety apparatus may comprise an abrasion-resistant covering on the rear surface thereof. The abrasion-resistant covering may be flexible.

The abrasion-resistant covering may comprise of only a single layer. It will be understood that the purpose of such single layer may be fulfilled without any additional layers of different material which merely add weight and cost to the safety apparatus. The abrasion-resistant covering may be a coating. In such case the coating may be an elastomeric polyurethane coating. The abrasion-resistant covering may be a wrapping. In such case the wrapping may be a flexible wrapping. The abrasion-resistant covering may be made of polyurethane or Polyvinyl chloride. The abrasion-resistant covering may be chemical-resistant, fire-resistant and water-resistant. The abrasion-resistant covering may further comprise a non-slip surface.

The safety apparatus may be flexible. The safety apparatus may comprise only of a flexible material, made of foam and/or gel or rubber, and a flexible abrasion-resistant covering. The safety apparatus may be free of armor layers or armor plates made of rigid materials such as metal, plastic, fiber composite or fiberglass, etc. It will be understood that the perforated layer of material may be more flexible than an identical but non-perforated (i.e. solid) comparative layer of the same material

The safety apparatus may be free of an armor layer.

The safety apparatus may comprise only two types of layers, namely a first layer being the perforated layer of material made of foam and/or gel or rubber, and a second layer which is an abrasion-resistant covering. The safety apparatus may comprise only two types of materials, namely a first layer being the perforated layer of material made of foam and/or gel or rubber, and a second layer which is made of a material which is an abrasion-resistant covering. In either of the preceding examples, each of the first and second layers of material may be made of a homogenous material. The perforations of the perforated layer may be filled with articles with damping and/or energy-absorbing properties. In the latter case, the articles are considered to constitute part of the perforated layer and, for the purposes of the specification and claims, are not a separate layer in themselves. In such case, the safety apparatus may be comprised of only three materials. The safety apparatus may comprise no more than two layers, each layer being of one type of material. The safety apparatus may comprise no more than two layers, each layer being of one type of material and one of the layers comprising articles in the perforations thereof which are made of a material different to the perforated layer.

In a case where articles are present, the articles may have a density less than the material. The articles may be polystyrene.

The safety apparatus may be configured for a rear surface thereof to abut a user and the impact-receiving surface to simultaneously abut an armored construction. For example the safety apparatus may be attached to the upper surface of the floor of an armored vehicle.

In accordance with yet another aspect of the subject matter disclosed herein, there is provided an armored vehicle having a crew compartment floor and comprising a safety apparatus attached to the crew compartment floor. The safety apparatus may have any of the features described above.

The safety apparatus may be disposed on the upper surface of a floor of the vehicle adjacent a seat so that a person seated on the seat may rest their feet on the safety apparatus. The seat may be a suspended seat. To further explain, the vehicle may further comprise at least one seat having opposite front and rear edges and being suspended above the crew compartment floor, the safety apparatus, in a plan view of the seat and crew compartment floor, may extend on the crew compartment floor from the front edge of the seat in a direction away from the rear edge thereof. Such arrangement may allow a user seated on the seat to rest their feet on the safety apparatus.

One of the advantages of using a safety apparatus of the type described above, may be that it only covers a limited portion of a floor of a vehicle, and therefore has a lower weight than if such safety apparatus were to cover the entire floor.

Another one of the advantages of the safety apparatus of the type described above, when it has a thickness less than 3.15 inches (80mm), may be that it has relatively small vertical thickness and therefore utilizes less vertical space within a crew compartment of the vehicle, when compared with a suspended seat or a floating floor.

Yet another one of the advantages of the safety apparatus of the type described above, is that it may provide far greater comfort for a user seated in a vehicle with their feet resting on the safety apparatus, than resting their feet on an elevated foot rest.

The vehicle may further comprise a second floor disposed underneath said crew compartment floor and spaced therefrom. The second floor may be a floating floor.

The layer of perforated material or the multi-layer construction comprising such layer, may have a thickness of at least 1.18 inches or greater, and a surface of the crew compartment floor of the vehicle to which the safety apparatus is attached, may be a distance of at least 27.6 inches from the ground.

The material of the safety apparatus may be hermetically sealed within an abrasive-resistant covering and the crew compartment floor. The protective covering may be attached to the crew compartment floor via adhesive or bolting. The adhesive may be an acrylic adhesive.

The safety apparatus may comprise an abrasion-resistant covering having any of the features described above with respect to the other aspects of the subject matter disclosed herein,

The safety apparatus may be part of a vehicle.

In accordance with yet another aspect of the subject matter disclosed herein, there is provided an armored vehicle comprising a safety apparatus having any of the features described above.

The armored vehicle may comprise a floor mat attached to an upper surface of a crew compartment floor thereof, the floor mat being configured to be used as a floor mat under normal conditions, and to be used as a safety apparatus for providing protection against an explosion which may exert certain compressive forces thereon, the floor mat comprising a perforated layer of material made of foam and/or gel or soft rubber.

In accordance with a further aspect of the subject matter disclosed herein, there is provided a method of producing a safety apparatus for providing an occupant of an armored vehicle protection against an explosion which may exert on the safety apparatus certain compressive forces, the armored vehicle having a crew compartment floor, the method including attaching a perforated layer of material, made of foam and/or gel or soft rubber, to the crew compartment floor.

The method may further comprise a preceding step of forming perforations in the perforated layer of material.

The method may further comprise a preceding step of hermetically sealing the at least one layer of perforated material being within a wrapping.

The method may further comprise a subsequent step of hermetically sealing the material within an abrasive-resistant covering and the crew compartment floor. The abrasive-resistant covering may directly contact the material. The abrasive-resistant covering may directly contact the crew compartment floor.

The material may directly contact the crew compartment floor.

The method may comprise a safety apparatus and/or vehicle having any of the features described above with respect to the other aspects of the subject matter disclosed herein.

In accordance with still a further aspect of the subject matter disclosed herein, there is provided a method of producing a safety apparatus for providing an occupant of an armored vehicle protection against an explosion, the vehicle having a crew compartment floor, the method including:
- hermetically sealing a material being formed with a perforated layer within a wrapping; and
- attaching the wrapping to the crew compartment floor.

The method may comprise a safety apparatus and/or vehicle having any of the features described above with respect to the other aspects of the subject matter disclosed herein, or may include method steps or construction described above.

A safety apparatus having any of the features referred to above in connection with any of the aspects of the subject matter disclosed herein, may constitute a floor mat, when attached to a floor.

### BRIEF DESCRIPTION OF THE DRAWINGS

In order to understand the subject matter disclosed herein and to see how it may be carried out in practice, embodiments will now be described, by way of non-limiting example only, with reference to the accompanying drawings, in which:
**Fig. 1** is a schematic plan view of a safety apparatus in accordance with an embodiment of the subject matter disclosed herein, engaging a portion of a floor of a vehicle;
**Fig. 2** is a schematic sectional side view of the safety apparatus and floor in Fig. 1;
**Fig. 2A** is a schematic sectional side view of the safety apparatus and floor in Fig. 1;
**Fig. 3** is a schematic perspective view of the safety apparatus and floor in Figs. 1 and 2;
**Fig. 4** is a schematic perspective view of the safety apparatus and floor in Figs. 1 to 3, additionally shown are additional safety apparatuses with imaginary feet positioned thereon, and a second floor underneath the floor shown in Figs. 1 to 3;
**Fig. 5** is a schematic plan view of the safety apparatuses, imaginary feet and floor in Fig. 4, and suspended seats;
**Fig. 6** is a schematic sectional side view of a safety apparatus and floor in accordance with another embodiment of the subject matter disclosed herein;
**Fig. 7** is a test-result sheet;
**Fig. 8A** is a schematic perspective view of a material layer of a safety apparatus in accordance with an embodiment of the subject matter disclosed herein;
**Fig. 8B** is a schematic plan view of the material layer in Fig. 8A;
**Fig. 8C** is a schematic sectional side view of the material layer in Figs. 8A and 8B;
**Fig. 9A** is a schematic perspective view of a material layer of a safety apparatus in accordance with an embodiment of the subject matter disclosed herein;
**Fig. 9B** is a schematic plan view of the material layer in Fig. 9A;
**Fig. 9C** is a schematic sectional side view of the material layer in Figs. 9A and 9B;
**Fig. 10A** is a schematic perspective view of a material layer of a safety apparatus in accordance with an embodiment of the subject matter disclosed herein;
**Fig. 10B** is a schematic plan view of the material layer in Fig. 10A;
**Fig. 10C** is a schematic sectional side view of the material layer in Figs. 10A and 10B;
**Fig. 11A** is a schematic sectional side view of a material layer in accordance with an embodiment of the subject matter disclosed herein; and
**Fig. 11B** is a partial schematic plan view of the material layer in Fig. 11A.

### DETAILED DESCRIPTION OF EMBODIMENTS

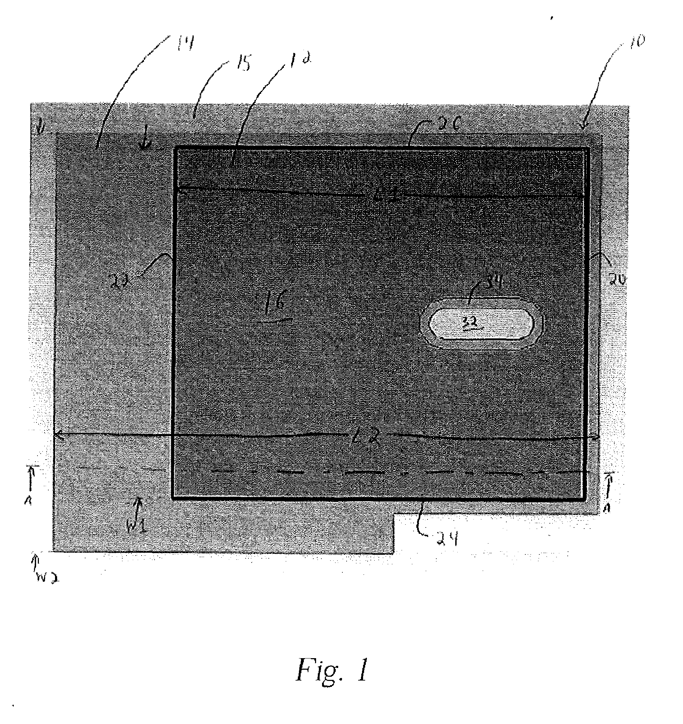

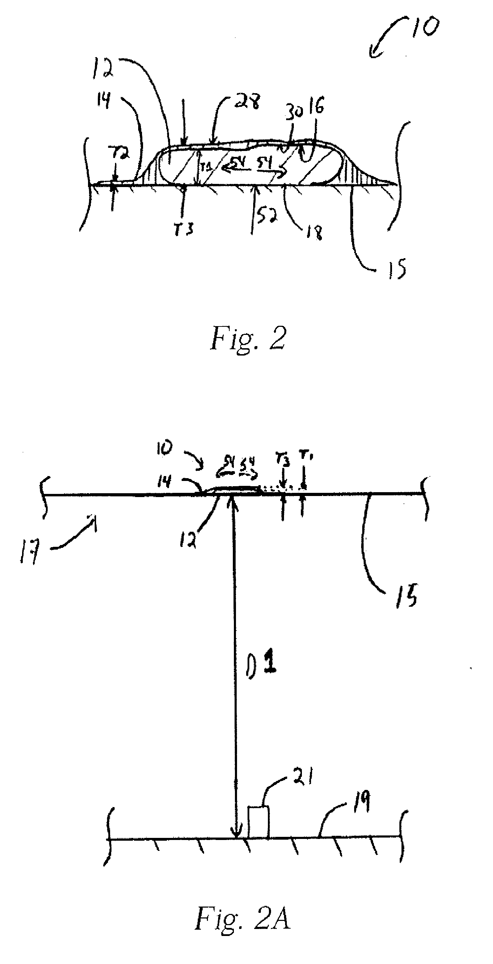

Referring now to the drawings wherein like reference characters designate like or corresponding parts throughout the several views, there is shown in Figs. 1 and 2, a safety apparatus for providing protection against an explosion, generally designated by the numeral 10.

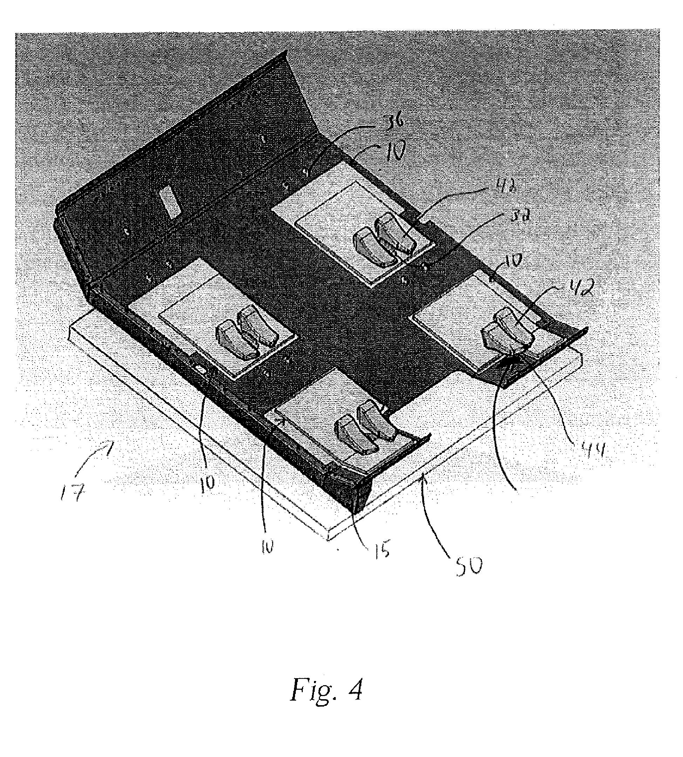

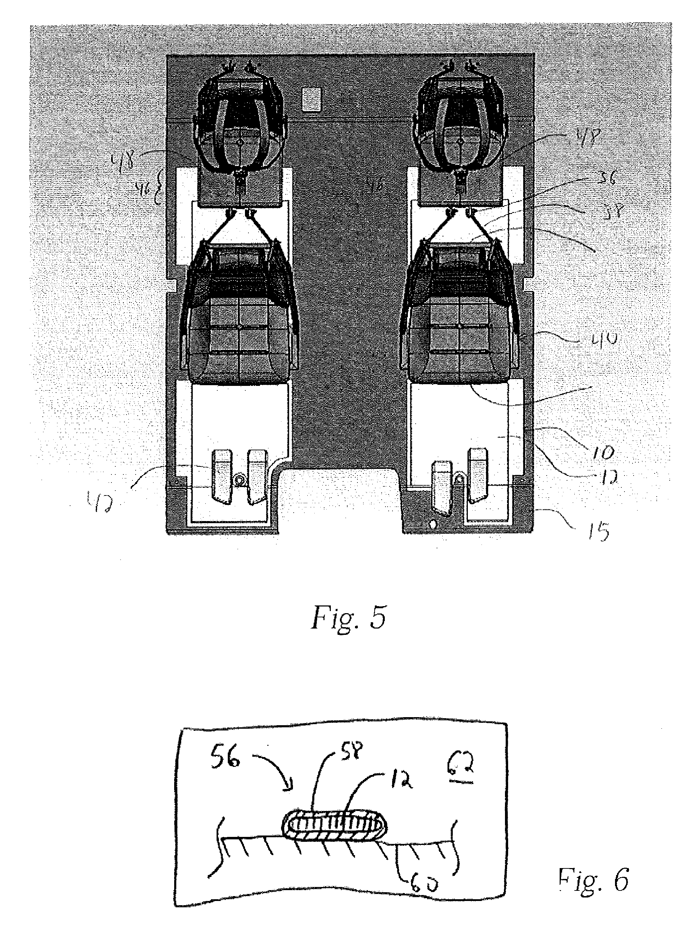

The safety apparatus 10 comprises a layer of material 12 and an abrasion-resistant covering 14. The safety apparatus 10 is shown attached to a crew compartment floor 15 of an armored vehicle 17 (only the floor of the vehicle is shown in Figs. 1 to 3, with further elements of the armored vehicle 17 being seen in Figs. 4 and 5).

The layer of material 12 is made of a dry viscoelastic air-frothed polyurethane elastomer. In this example, the type of material of the layer 12 is sold under the trade name "SHOCKtec Air2Gel® HD FR" by Kemmler Products Inc, Mooresville, USA. Properties of the material 12 include:
- when tested in accordance with ASTM 3574, a density of less than 18 lb./ft³;
- when tested in accordance with ASTM 1667, a compression set of less than 2%;
- when tested in accordance with ASTM 3574, a compression set of less than 10%;
- when tested in accordance with ASTM D-624, a tear strength of 10 lbs/in minute;
- when tested in accordance with ASTM 3574, an elongation of 80%;
- when tested in accordance with ASTM 3574, a tensile strength of 55 psi;
- a Shore A hardness of 15;
- when tested in accordance with ASTM 3574, a compression force deflection of 9±2 psi; and
- when tested in accordance with a drop weight impact test, may have an energy return of between about 35 to 41%.

It will be understood that any material being a foam and/or gel or soft rubber, and having similar properties to those described above may also be suitable for use with the subject matter disclosed herein. Another suitable material may be GA 060, sold by Palziv in Israel.

The layer of material 12 has a first side 16, comprising a rear surface, and a second side 18 (Fig. 2), comprising an impact-receiving surface, which are substantially planar and parallel to each other, as well as a front edge 20, a rear edge 22, and side edges (24,26) extending between the front and rear edges (20,22). As can be seen best in Fig. 1:
- the layer of material 12 has a length L1, which in this example is about 24 inches;
- the layer of material 12 has a width W1, which in this example is about 20 inches;
- the abrasion-resistant covering 14 has a length L2, which in this example is about 31.5 inches; and
- the abrasion-resistant covering 14 has a width W2, which in this example is about 24 inches.

Drawing attention to Fig. 2, it can be seen that the layer of material 12 has a thickness T1, which in this example is about 0.75 inches.

To produce the safety apparatus 10 shown in Figs. 1 and 2, the layer of material 12 is attached to the crew compartment floor 1 and hermetically sealed between the abrasive-resistant covering 14 and the crew compartment floor 15. The layer of material 12 is attached to the crew compartment floor 15 with the first side 16 facing the crew compartment (not shown) and the second side 18 facing the crew compartment floor 15. Notably, since the crew compartment floor 15, in this example, is a floor of an armored vehicle designed to traverse territory which may have mines or improvised explosive devices planted therein, the second side 18 thus faces a direction from which an explosion may likely be expected, i.e. the ground underneath the vehicle. Therefore in this example the second side 18 is horizontal.

The abrasion-resistant covering 14 is an elastomeric polyurethane coating, and in this example, the abrasion-resistant covering 14 used is sold under the trade name "Tuff Stuff® sold by Rhino Linings, Vertriebsgesellschaft mbH Otto-Hahn-Straße,35 D-63303 Dreieich-Sprendlingen. The abrasion-resistant covering 14 has a first surface 28 facing the crew compartment (not shown) and a second surface 30 contacting the first side 16 of the material 12. Properties of the abrasion-resistant covering 14 include that it is chemical-resistant, fire-resistant and water-resistant. Additionally, the first surface 28 is non-slip, for the safety of a user (not shown) walking thereon. The abrasion-resistant covering 14 has a thickness T2, which in this example is about 0.05 inches. Thus the combined thickness T3 of the material 12 and abrasion-resistant covering 14, in this example is about 0.8 inches.

It will be understood that any abrasion-resistant covering having similar properties to those described above may also be suitable for use with the subject matter disclosed herein. For example, another suitable covering may be Durabek^{™}, sold by Cote∼L industries, Inc. of Teaneck, NJ, USA. If a safety apparatus is intended for outdoor use, materials which have higher UV protection properties, for example, Durabek 18, may be utilized.

Referring briefly to Fig. 2A, there is shown a safety apparatus 10 comprises a layer of material 12 and an abrasion-resistant covering 14. The safety apparatus 10 is attached to a crew compartment floor 15.

The distance D1 from the ground 19 upon which the vehicle 17 rests to the crew compartment floor 15 is about 27.6 inches (700mm).

The safety apparatus 10 is similar to that shown in Fig. 2, except that the thickness T1 of the layer of material 12, in this example is about 1.18 inches (30mm). The thickness T3 is about 1.23 inches (31.2mm).

The thickness T1 of the material 12 is the minimum thickness believed sufficient to provide protection against compressive forces of an explosion, caused by an explosive including 6kg of TNT 21 on the ground 19 directly underneath the safety apparatus 10, for deflecting the compressive forces in a direction substantially perpendicular to the second side (such direction shown by arrows 54).

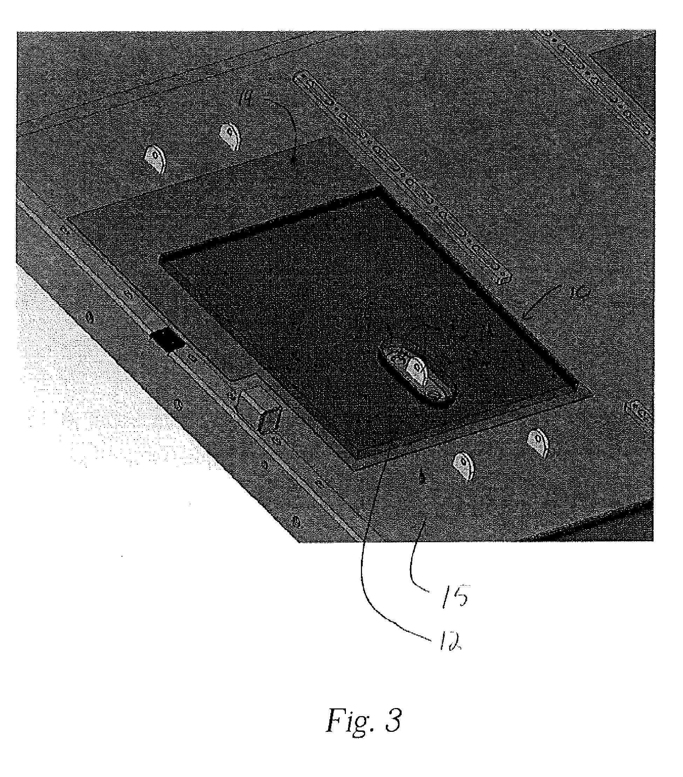

Now referring also to Figs. 3 to 5, the safety apparatus 10 is shown to be formed with an optional cut-out 32. Notably, the cut-out 32 in this example is oval-shaped, with the abrasion-resistant covering 14 sealed to the floor within the cut-out, as shown by edge 34 of the abrasion-resistant covering 14, thereby ensuring that the layer of material 12 remains hermetically sealed between the floor and the abrasion-resistant covering 14.

The cut-out 32 enables metal brackets 36, to protrude therethrough and thus be accessed for securing ropes 38 (Fig. 5) of suspended seats 40 (Fig. 5) to be fastened thereto. As can be seen in Figs. 4 and 5, imaginary feet 42 are shown positioned on either side of the cut-out 32, resting on a portion of the safety apparatus 10 comprising the layer of material 12. One of the feet, designated by the numeral 44, may be a driver's foot positioned on a driving pedal 45, and hence may not necessarily rest on the safety apparatus 10. However, optionally, the pedal 45 may also have such safety apparatus 10 attached thereto (not shown).

As can be seen best in Fig. 5, the abrasion-resistant covering 14 includes an extension portion 46 under the rear seats 48. This is because the rear seats 48 may be folded upwards, and the extension portion 46 is beneficial as it helps to prevent users slipping on the crew compartment floor 15, when walking thereon.

Similarly, while not shown, an entire floor may be covered with an abrasion-resistant covering 14, when installing the safety apparatuses 10, to efficiently also prevent slippage across the entire floor.

Referring now to Fig. 4, it can be seen that a safety apparatus 10 may be used on a crew compartment floor 15, which is disposed above a second floor 50. Thus the crew compartment floor 15 may be a so-called 'floating floor', which may provide an even higher level of protection to an occupant of the vehicle.

Turning now to Fig. 2, when the vehicle 17 is impacted by an explosion thereunder (not shown), the crew compartment floor 15 and hence the second side 18 of the layer of material 12 may be subjected to compressive forces, shown schematically by arrow 52. The layer of material 12 is configured to deflect the compressive forces 52, or at least a significant portion thereof, in a substantially perpendicular direction to the second side 18 and crew compartment floor 15, as shown schematically by arrows 54. Thus a user (not shown) whose feet may be resting on the upper surface 28 of the abrasion-resistant covering 14, will receive significantly reduced impact from the compressive forces caused by the explosion.

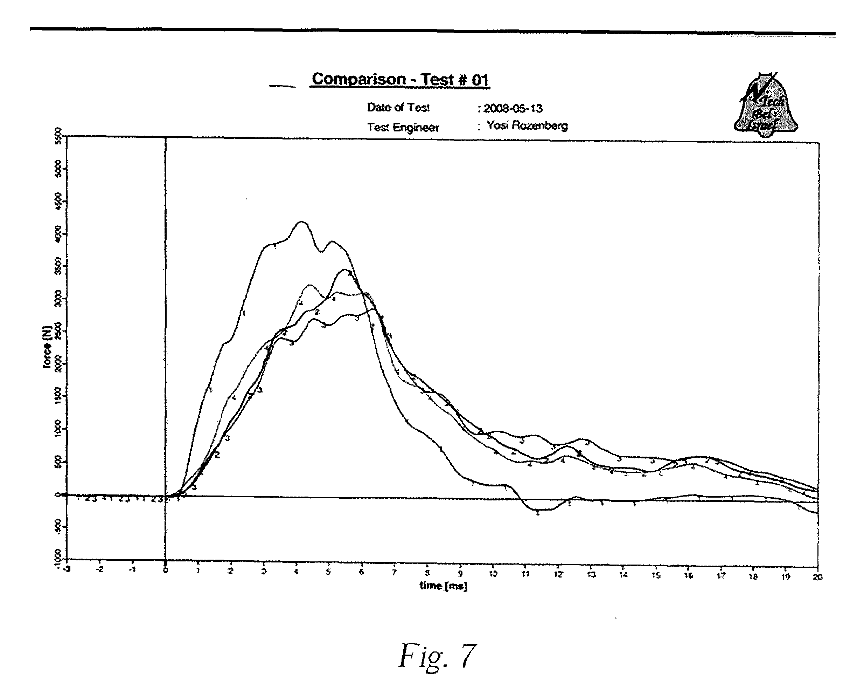

The theory that such safety apparatus 10 may be effective against the tremendous forces of an explosion were tested, and a copy of the test results may be seen in Fig. 7. The test conducted was as follows:
- a TNT explosive, having a weight of 0.5 kg, and being a cube having 10cm sides, was placed 25cm underneath a table comprising a sensor and detonated; the sensor's recording is shown in the test results as the line designated by the reference numeral 1;
- the test was repeated with three materials, namely SHOCKtec Air2Gel® HD FR, SHOCKtec Gel®, and 3MTM floor pad.

As can be seen, the material designated by the numeral 3, which was SHOCKtec Air2Gel® HD Fr, surprisingly deflected about 1000 Newtons of compressive force from the explosion. The material designated by the numeral 2, which was 3M^{™} floor pad, still surprisingly deflected about 500 Newtons of compressive force from the explosion, which would also be suitable for providing a safety effect,

Thus the concept behind the disclosed subject matter was demonstrated as successful, even against a closely located explosion.

Referring now to Fig. 6, there is shown another example safety apparatus 56, comprising a layer of material 12 and an abrasion-resistant covering 58. The safety apparatus 56 is shown attached to a crew compartment floor 60 of an armored vehicle 62 (only the floor of which is visible).

Safety apparatus 56 differs from safety apparatus 10 in Figs. 1 to 5 only in that the abrasion-resistant covering 58 is a flexible polyurethane wrapping, within which the layer of material 12 is hermetically sealed..

To produce the safety apparatus 56, the layer of material 12 is hermetically sealed within the wrapping 58 and the wrapping 58 is attached to the crew compartment floor 60. The attachment in the present example being accomplished with an acrylic adhesive, however other suitable attachment means may be possible.

Some non-limiting further example constructions of the material used with the safety apparatuses described above, are detailed below.

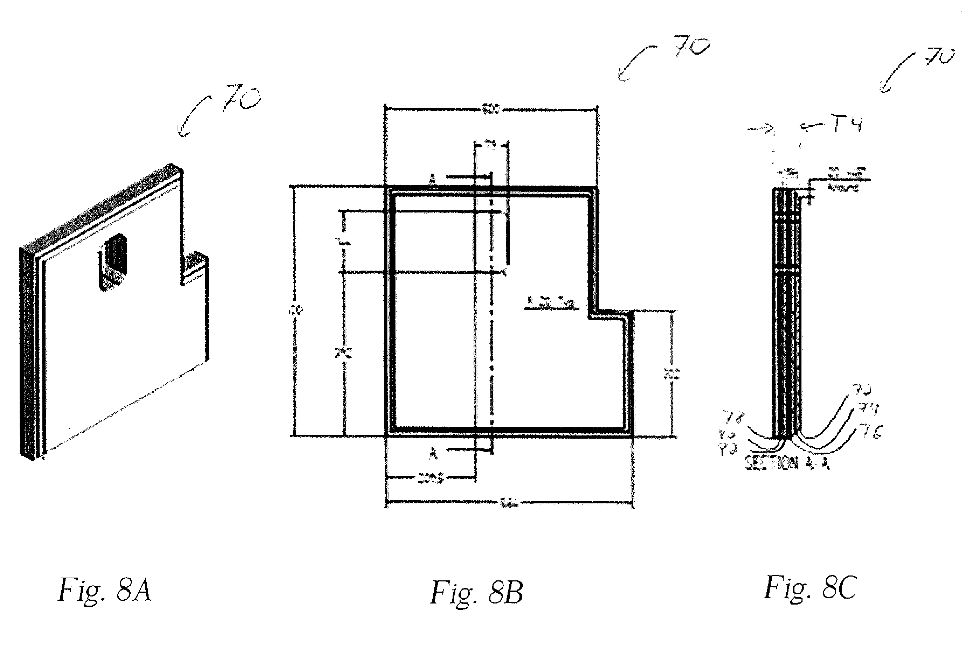

Referring now to Figs. 8A-8C, an example material, generally designated as 70, is shown. In this example the material 70 is part of a multi-layer construction which includes perforated and non-perforated layers of material.

The multi-layer construction has six layers (72, 74, 76, 78, 80, 82). Each layer has a thickness T5, which in this example is 10mm thick. The multi-layer construction has a thickness, indicated by the character T4, which is 60mm.

Each layer of the multi-layer construction is made of the same type of material. In this example each layer (72, 74, 76, 78, 80, 82) is made of the same material as material 12 described in Figs. 1 to 3.

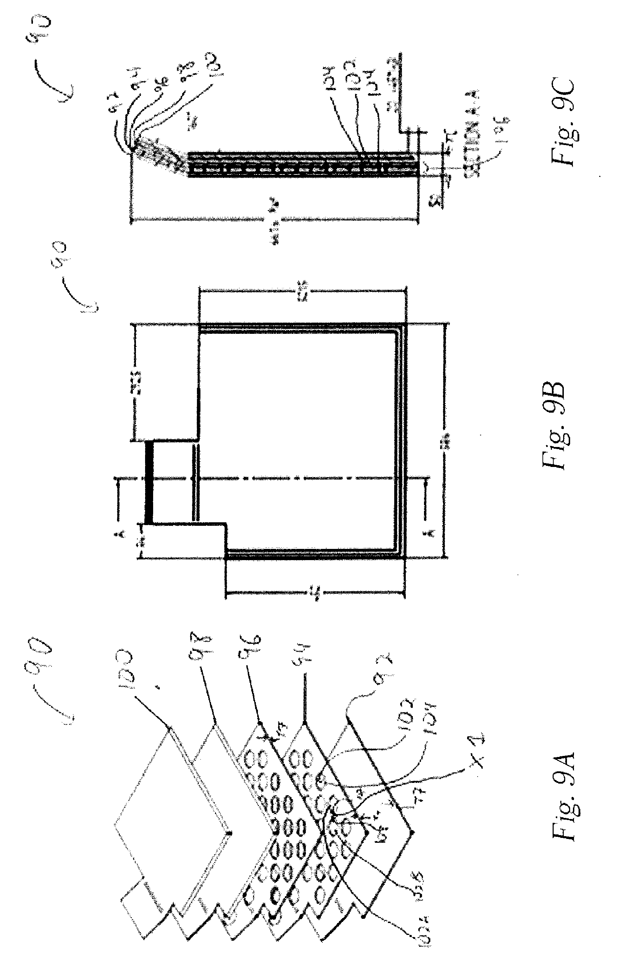

Referring now to Figs. 9A-9C, another example construction of the material, generally designated as 90, is sown. In this example the material 90 is part of a multi-layer construction which includes perforated and non-perforated layers of material.

The material 90 has a thickness, indicated by the character T6.

The material 90 has five layers (92, 94, 96, 98, 90). Each layer has a thickness T7, which in this example is 10mm thick. Therefore the total thickness T6 of the material 90, is 50mm. Each layer is made of the same type of material. In this example each layer (92, 94, 96, 98, 90) is made of the same material as material 12 described in Figs. 1 to 3.

Notably, layers 94 and 96 are perforated layers. Each of the perforated layers (94,96) are formed with perforations 102, having peripheral edges 104. The perforations are cylindrical shaped perforations. The perforations in layers 94 and 96 are aligned with each other, such that layers 94 and 96 could also be considered to be sub-layers of a single perforated layer 106.

The distance X1 between proximal points (107,108) of adjacent perforations (102A,102B) is less than twice the thickness of the perforated layer 106. In the present case, the distance X1 is about 15mm and twice the thickness of the perforated layer 106 is 40mm.

While a relationship of the material between the perforations has been given, it will be appreciated that there must be a minimum amount of material in the perforated layer to enable the existence thereof.

In the present example the perforations constitute about 64 percent of the perforated layer 106 and therefore the material itself constitutes about 36 percent of the perforated layer 106.

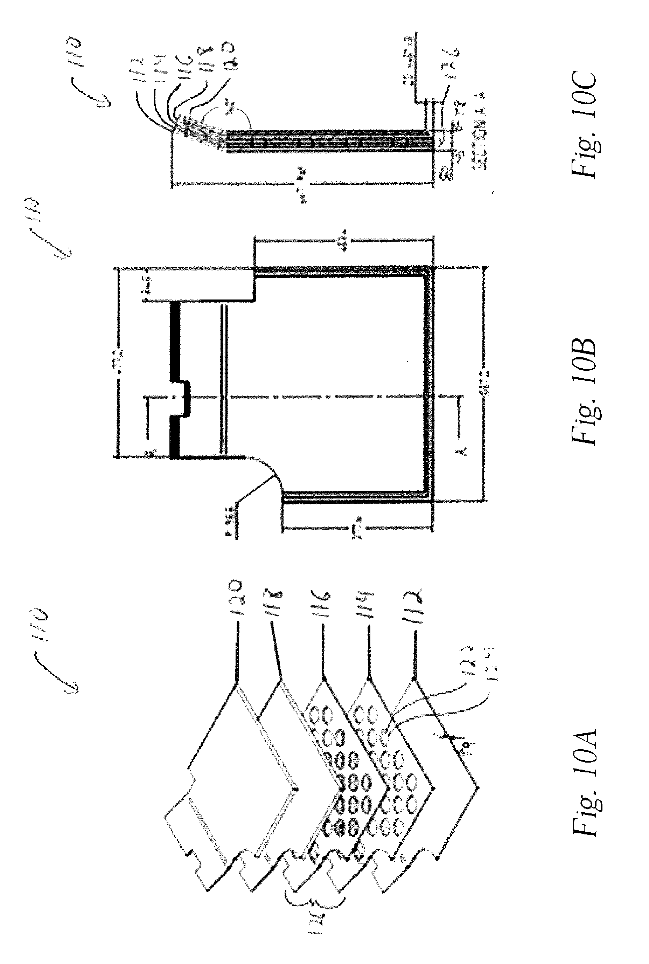

Referring now to Figs. 10A-10C, yet another example material, generally designated as 110, is shown.

The material 110 is similar to the material 90 in Figs. 9A-9C, with a slightly modified peripheral edge.

Material 110 has a thickness, indicated by the character T8.

In this example the material 110 has five layers (112, 114, 116, 118, 120). Each layer has a thickness T9, which in this example is 10mm thick. Therefore the total thickness T8 of the material 110, is 50mm.

Notably, layers 114 and 116 are perforated sub-layers of a perforated layer 126. Each of the perforated layers (114,116) are formed with perforations 122, having peripheral edges 124. The perforations are cylindrical shaped perforations.

Notably, it has been discovered that the existence of perforated layers may provide ballistic performance against explosions similar to that provided by non-perforated layers. Thus it was seen in experimental results that material (90,110) of construction shown in Figs, 9A-10C, which has an overall thickness of 50mm, provided equivalent performance to the material 70 seen in Figs. 8A-8C.

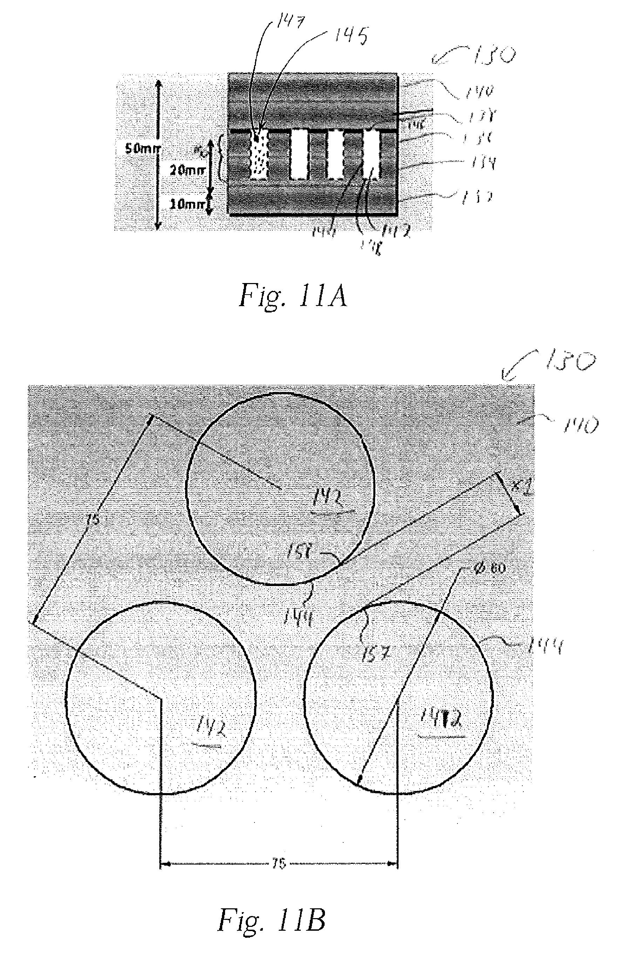

While it will be appreciated that perforations of other shapes may be suitable, further details of a material having cylindrical perforations are now provided with respect to Figs. 11A and 11B.

Figs. 11A and 11B show a material 130 of overall thickness 50mm,

In this example the material 130 has five layers (132, 134, 136, 138, 140). Each layer has a thickness, which in this example is 10mm thick. Each layer is made of the same type of material. In this example each layer (92, 94, 96, 98, 90) is made of the same material as material 12 described in Figs. 1 to 3.

Notably, layers 134 and 136 are perforated layers. Each of the perforated layers (134,136) are formed with perforations 142, having peripheral edges 144, and top and bottom edges (146,148). The perforations are cylindrical shaped perforations. The perforations in layers 134 and 136 are aligned and coaxial with each other, such that layers 134 and 136 can be considered to be sub-layers of a single perforated layer 150.

The distance X1 between proximal points (157,158) of adjacent perforations 144 is less than twice the thickness of the perforated layer 150, In the present case, the distance X1 is about 15mm and twice the thickness of the perforated layer 106 is 40mm. It can also be seen that the center to center distance of the perforations 144 is 75mm.

It will also be noted, however, that the exact distances given may be varied in accordance with an expected threat level.

Referring to Fig. 11A, one of the perforations 145 is optionally filled with articles 147 for absorbing energy of compressive forces of an explosion. The articles 147 in the present example are polystyrene.

It will be understood that all of the perforations in any of the safety apparatus in accordance with the subject matter disclosed herein may comprise articles. That is to say that a safety apparatus may comprise articles in all of the perforations of the perforated layer(s) thereof, or in some of the perforations, or in none of the perforation. In the latter case, the perforations will be merely filled with air.

## Claims

1. A floor mat configured to be used as a floor mat under normal conditions, and to be used as a safety apparatus for providing protection against an explosion which may exert certain compressive forces thereon, the floor mat comprising a perforated layer of material made of foam and/or gel or soft rubber.

2. A floor mat according to Claim 1, wherein the perforated layer of material is made of a dry viscoelastic air-frothed polyurethane elastomer.

3. A floor mat according to Claim 1 or 2, wherein the perforated layer of material, when an impact-facing surface thereof is subjected to compressive forces exerted thereon by the explosion, is configured to deflect the compressive forces in a direction substantially perpendicular to the impact-facing surface.

4. A floor mat according to any one of Claims 1 to 3, wherein the perforated layer of material is sandwiched between two non-perforated layers of material.

5. A floor mat according to Claim 4, wherein the non-perforated layers of material are made of the same type of material as the perforated layer.

6. A floor mat according to any one of Claims 1 to 5, wherein the perforated layer comprises opposite first and second external surfaces, and a thickness dimension perpendicular to the first and second external surfaces and extending therebetween, said perforations extending from the first external surface to the second external surface, wherein a distance between proximal points of adjacent perforations is less than twice the thickness of the perforated layer.

7. A floor mat according to any one of Claims 1 to 6, wherein the shape of the layer of perforated material is such that the impact-receiving surface and rear surface are substantially planar and opposite to each other, and are spaced by a thickness dimension perpendicular to the impact-receiving surface and rear surface, the thickness being less than 3 inches.

8. A floor mat according to any one of Claims 1 to 7, wherein the perforations constitute between 50 to 75 percent of the volume of the perforated layer.

9. A floor mat according to any one of Claims 1 to 8, further comprising an abrasion-resistant covering on a rear surface thereof.

10. A floor mat according to Claim 9, wherein the abrasion-resistant covering is a coating.

11. An armored vehicle comprising a floor mat attached to an upper surface of a crew compartment floor thereof, the floor mat being configured to be used as a floor mat under normal conditions, and to be used as a safety apparatus for providing protection against an explosion which may exert certain compressive forces thereon, the floor mat comprising a perforated layer of material made of foam and/or gel or soft rubber.

12. An armored vehicle according to Claim 11, further comprising a second floor disposed underneath said crew compartment floor and spaced therefrom.

13. An armored vehicle according to Claim 11 or 12, wherein the safety apparatus is disposed on the upper surface of a floor of the vehicle adjacent a suspended seat.

14. A method of producing a safety apparatus for providing an occupant of an armored vehicle protection against an explosion which may exert on the safety apparatus certain compressive forces, the armored vehicle having a crew compartment floor, the method including attaching a perforated layer of material, made of foam and/or gel or soft rubber, to the crew compartment floor.

15. A method according to Claim 14, further comprising a preceding step of forming perforations in the perforated layer of material.

16. A method according to Claim 14 or 15, further comprising, subsequent to the step of attaching, a step of hermetically sealing the material within an abrasive-resistant covering and the crew compartment floor.

17. A method according to Claim 14 or 15, further comprising, preceding the step of attaching, a step of hermetically sealing the at least one layer of perforated material being within a wrapping.

18. A safety apparatus for providing protection against an explosion which may exert on said safety apparatus certain compressive forces, the safety apparatus comprising a perforated layer of material made of foam and/or gel or soft rubber.
